# EUROPEAN PATENT APPLICATION

(11) **EP 1 881 410 A1**
(43) Date of publication of application: **23.01.2008**
(21) Application number: 06713275.3
(22) Date of filing: 08.02.2006
(51) Int. Cl.: G06F 13/00

(54) **INTERNET TERMINAL DEVICE USING WINDOW FRAME CONFIGURATION INFORMATION, FRAME SERVER, INFORMATION SYSTEM, AND BROWSER EXECUTION METHOD**

(30) Priority: 20.04.2005 JP 2005122986
(71) Applicant: MATSUSHITA ELECTRIC INDUSTRIAL CO., LTD., Osaka 571-8501 (JP)
(72) Inventor: IDE, Shinichi c/o Matsushita El. Ind. Co. Ltd, 2-1-61, Shiromi, Chuo-ku, Osaka 540-6207 (JP); MORI, Daisuke c/o Matsushita El. Ind. Co. Ltd, 2-1-61, Shiromi, Chuo-ku, Osaka 540-6207 (JP)
(74) Representative: Betten & Resch
(86) International application number: PCT/JP2006/302132
(87) International publication number: WO 2006/114924

(57) **Abstract**

There is provided a mechanism for an Internet terminal device to acquire window frame configuration information as a browser configuration element and display the information in a window frame. The present invention provides: (1) an Internet terminal device including means for holding a device identifier for identifying itself, means for acquiring window frame configuration information according to the device identifier, means for configuring the Internet browser by using the information, and means for executing the browser configured by that Internet browser configuration means; (2) a frame server including means for receiving the device identifier from the Internet terminal device, means for holding the device identifier and the window frame configuration information while correlating them to each other, and means for acquiring the window frame configuration information correlated with the received device identifier and returns it to the Internet terminal device; (3) an information system including the Internet terminal device and the information system; and (4) a method associated with them.

## Description

### BACKGROUND OF THE INVENTION

### Field of the Invention

The present invention relates to an internet terminal apparatus, which configures an intemet browser by means of window frame configuration information, and executes the browser, a server for frame, and an information system comprising them, and an execution method for browser by means of them.

### Description of the Related Art

A window of internet terminal apparatus generally comprises an area called a window frame other than an area for displaying information (content information) provided from a content provider (CP).

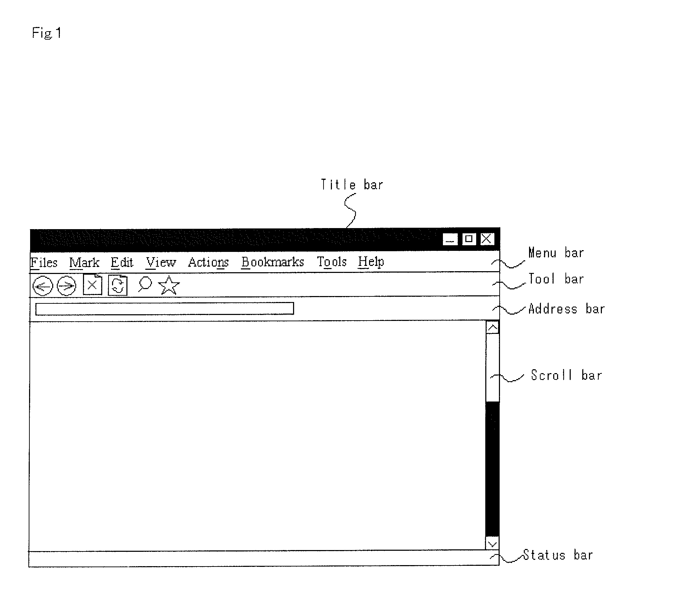

Fig. 1 is a conceptual diagram showing names of components of a window screen of a computer terminal apparatus. The window frame includes a title bar, a menu bar, a tool bar, an address bar, a scroll bar, and a status bar.

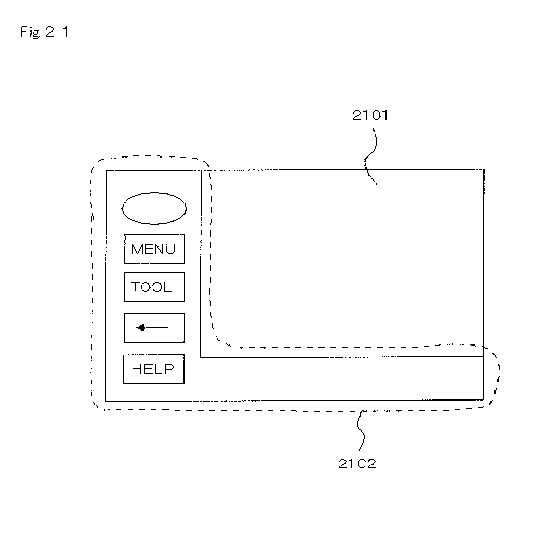

Fig.21 is a conceptual diagram showing names of components of a window screen of a digital TV equipped with internet function. In a digital TV having a function as an internet terminal, generally, the display area of content received via radio wave (an area for displaying broadcast program) corresponds to the content area, and the other areas included in the window frame. In Fig. 21, the case where areas other than the area 2101 for displaying broadcast program are included in the window frame 2102.

Conventionally, the above portion is used as an area for displaying a file name or a file menu of the content information when the intemet terminal apparatus performs browsing of the content information by means of Web browser in accordance with protocol sent from a portal server to an internet terminal apparatus. Therefore, this area has not been used as an area for displaying information indicating details of the content itself. For example, in Jpn. Unexamined Patent Application Publication No. 2000-500243, a system for displaying text information and/or graphic information on a screen etc. of an internet terminal is disclosed. In Jpn. Unexamined Patent Application Publication No. 2000-500243, although a concept of a window frame (corresponding to a scroll bar) is utilized, the information for displaying the details of the content itself is given, and the window frame is mainly utilized as an area in which operation for moving display area for content information is carried out.

However, in order to display various content information on a small screen of the intemet terminal apparatus, it is useful that the information indicating details of the content itself can be displayed on the window frame. Further, for the internet terminal apparatus user, it is useful that the user can control details of the content itself displayed on the window frame and timing of display.

In order to respond to such needs of displaying information on the window frame (hereinbelow, referred to as 'window frame display information'), it is necessary to establish a configuration in which the internet terminal apparatus utilizes the window frame configuration information for displaying the window frame display information, so that it becomes possible to display the window frame display information on the window frame.

Further, in order to cause the internet terminal apparatus to display the information to be displayed on the window in a user-friendly manner for the user of the internet terminal apparatus (e.g., displaying user's favorite information at any time) based on contract etc. between the user of the intemet terminal apparatus and CP, not included in the present invention, it is necessary to establish a configuration in which acquisition of the window frame configuration information in the internet terminal apparatus is carried out based on the apparatus ID of the apparatus, so that the server can uniquely identify the internet terminal apparatus based on the identifier thereof, and the identified specific intemet terminal apparatus can acquire the window frame configuration information from the specific server having such an identification function, thereby enabling display of the window frame configuration information in a user-friendly manner for the internet terminal apparatus user.

### SUMMARY OF THE INVENTION

In order to solve the above deficiencies, the present invention provides: (1) an internet terminal apparatus comprising a storing unit for apparatus ID, which stores an apparatus ID for identification of the terminal apparatus itself, an acquisition unit for window frame configuration information, which acquires information configuring window frame based on said apparatus ID, a browser configuration unit, which configures internet browser by means of the window frame configuration information acquired by said acquisition unit for window frame configuration information, and an execution unit, which executes the browser configured by said browser configuration unit; (2) a server for frame, comprising, a receiving unit for apparatus ID, which receives an apparatus ID from the transmitting unit for apparatus ID of the internet terminal apparatus, a storing unit for window frame configuration information, which stores the window frame configuration information correlated with the apparatus ID, and a returning unit for window frame configuration information, which acquires the window frame configuration information, which has been correlated with the apparatus ID received by the receiving unit for apparatus ID, from the storing unit for window frame configuration information, and returns it to the internet terminal apparatus; (3) an information system comprising, the internet terminal apparatus, and the server for frame; and (4) a method relating thereto.

According to the internet terminal apparatus, the server for frame, the information system comprising them, and the method of the present invention, the internet terminal apparatus utilizes the window frame configuration information for displaying the window frame display information, so that it becomes possible to display the window frame display information on the window frame.

The acquisition of the window frame configuration information in the internet terminal apparatus is carried out based on the apparatus ID of the apparatus, so that the server can uniquely identify the internet terminal apparatus based on the identifier thereof, and the identified specific internet terminal apparatus can acquire the window frame configuration information from the specific server having such identification function, thereby enabling display of the window frame configuration information in a user-friendly manner for the internet terminal apparatus user.

### BRIEF DESCRIPTION OF THE DRAWINGS

Fig. 1 is a conceptual diagram showing names of components of a window screen of a computer terminal apparatus;
Fig. 2 is a functional block diagram exemplifying an internet terminal apparatus of the first embodiment;
Fig. 3 is a conceptual diagram exemplifying the process of display in the intemet terminal apparatus of the first embodiment;
Fig. 4 is a concrete functional block diagram exemplifying an internet terminal apparatus of the first embodiment;
Fig. 5 is a conceptual diagram exemplifying the state of display in the intemet terminal apparatus of the first embodiment;
Fig. 6 is a flowchart of the intemet terminal apparatus of the first embodiment;
Fig. 7 is a functional block diagram exemplifying an internet terminal apparatus of a second embodiment;
Fig. 8 is a flowchart of the internet terminal apparatus of the second embodiment;
Fig. 9 is a functional block diagram exemplifying an internet terminal apparatus of a third embodiment;
Fig. 10 is a flowchart of the intemet terminal apparatus of the third embodiment;
Fig. 11 is a functional block diagram of a server for frame of a fourth embodiment;
Fig. 12 is a flowchart of the server for frame of the fourth embodiment;
Fig. 13 is a functional block diagram of a server for frame of a fifth embodiment;
Fig. 14 is a flowchart of the server for frame of the fifth embodiment;
Fig. 15 is a functional block diagram of an information system of a sixth embodiment;
Fig. 16 is a flowchart of the information system of the sixth embodiment;
Fig. 17 is a functional block diagram of an information system of a seventh embodiment;
Fig. 18 is a flowchart of the information system of the seventh embodiment;
Fig. 19 is a conceptual diagram showing a concrete configuration of the server for frame of the fourth embodiment;
Fig. 20 is a conceptual diagram showing a concrete configuration of the server for frame of the fourth embodiment;
Fig. 21 is a conceptual diagram showing names of components of a window screen of a digital TV equipped with internet function;
Fig. 22 is a concrete functional block diagram exemplifying an internet terminal apparatus of the first embodiment; and
Fig. 23 is a conceptual diagram exemplifying the state of display in the internet terminal apparatus of the first embodiment.

### Description of Reference Numerals

- 0200: Internet terminal apparatus
- 0201: Storing unit for apparatus ID
- 0202: Acquisition unit for window frame configuration information
- 0203: Browser configuration unit
- 0204: Execution unit
- 1100: Server for frame
- 1101: Receiving unit for apparatus ID
- 1102: Storing unit for window frame configuration information
- 1103: Returning unit for window frame configuration information
- 1500: Internet terminal apparatus
- 1510: Storing unit for apparatus ID
- 1512: Transmitting unit for apparatus ID
- 1513: Acquisition unit for window frame configuration information
- 1514: Browser configuration unit
- 1515: Execution unit
- 1516: Receiving means for window frame configuration information
- 1520: Server for frame
- 1521: Receiving unit for apparatus ID
- 1522: Storing unit for window frame configuration information
- 1523: Returning unit for window frame configuration information

### DETAILED DESCRIPTION OF THE PREFERRED EMBODIMENTS

Hereinbelow, the embodiments of the present invention will be described. The relation between embodiments and claims is as follows.

In the first embodiment, Claims 1 and 8 will be mainly described.

In the second embodiment, Claims 2 and 9 will be mainly described.

In the third embodiment, Claims 3 and 10 will be mainly described.

In the fourth embodiment, Claim 4 will be mainly described.

In the fifth embodiment, Claim 5 will be mainly described.

In the sixth embodiment, Claim 6 will be mainly described.

In the seventh embodiment, Claim 7 will be mainly described.

The present invention is not to be limited to the above embodiments and able to be embodied in various forms without departing from the scope thereof.

### <<First embodiment>>

### <Concept of First Embodiment>

The intemet terminal apparatus of the first embodiment is an apparatus, which executes a browser by means of the window frame configuration information acquired based on the apparatus ID thereof.

### <Configuration 1>

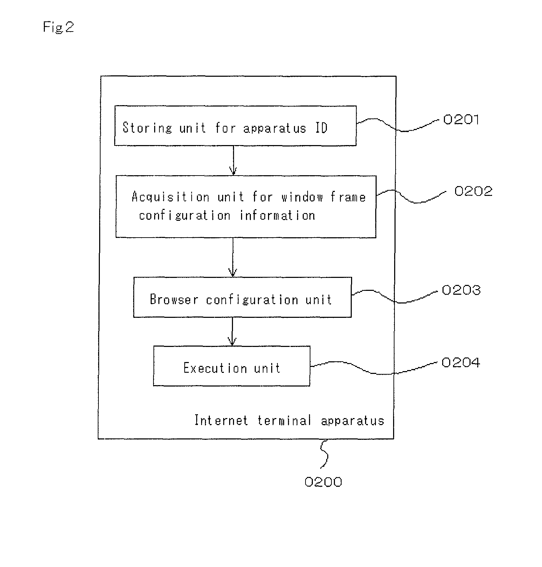

Fig. 2 is a functional block diagram exemplifying an internet terminal apparatus of the first embodiment.

The respective units of the present invention are configured by hardware, software, or both hardware and software. For example, in the case of using a computer, the respective units are implemented by the hardware configured by a CPU, a memory, a bus, an interface, and other peripheral devices etc., and by the software operable on the hardware. Specifically, by sequentially carrying out programs on the memory, the data on the memory and the data inputted via the interface are processed, stored, and outputted etc., thereby implementing functions of the respective units.

In Fig. 2, 'internet terminal apparatus' 0200 of the first embodiment comprises a 'storing unit for apparatus ID' 0201, 'acquisition unit for window frame configuration information' 0202, 'browser configuration unit' 0203, and 'execution unit' 0204.

The internet terminal apparatus widely corresponds to an apparatus, which can access to a Web site via the intemet and has a function of browsing Web pages, and may be a computer terminal such as a PC, a home appliance such as a TV, or a mobile terminal such as a mobile phone.

The 'storing unit for apparatus ID' is configured to store an apparatus ID for identifying the apparatus itself. For example, the storing unit for apparatus ID corresponds to a memory, and stores the apparatus ID. The 'apparatus ID' is an ID uniquely given to respective apparatuses for identifying the apparatus from the other apparatuses. The apparatus ID may be a production number of the internet terminal apparatus, or may be ID given separately from the production number. In both cases, the apparatus ID may be the only one in the world, or may be the only one within the server configuring the network including the apparatus.

The 'acquisition unit for window frame configuration information' is configured to acquire the window frame configuration information For example, in the acquisition of the window frame configuration information by the acquisition unit for window frame configuration information, the acquisition unit for window frame configuration information extracts the apparatus ID stored in the memory, transmits it to the server via the interface, acquires the window frame configuration information returned by the server based on the apparatus ID, and stores it in the memory. Alternatively, the returned window frame configuration information may be stored in an external storage device such as a HDD, a PC card, or a card having SD interface,

Here, the 'window frame' corresponds to a portion in a screen area (window) of the internet terminal apparatus excluding the display area of content. The shape thereof may be any of circle, triangle, or square and the like, and if there are frame borders, they may or may not be included. For example, in cases where the internet terminal apparatus is a computer terminal, the window frame corresponds not to an area for displaying the content information itself but to an area for displaying title of the content information details, or control of information such as change of display layout. In the above example of Fig. I, a central large square portion is an area for displaying the content information (hereinbelow, referred to as content area), and the other areas such as title bar, menu bar, tool bar, address bar, scroll bar, and status bar are included in the window frame. Note that, these are just examples, and any area as the above-mentioned area for displaying control of information may be used even if it does not include the above exemplified areas or includes other areas. Further, in cases where the internet terminal apparatus is a home appliance such as a TV, an area for displaying content received by the TV via radio wave (generally, an area for displaying broadcast program) corresponds to the content area, and the other areas correspond to the window frame.

As to the window frame display information, which is information to be displayed on the window frame, and the content information, which is information to be displayed on the content area (hereinbelow, referred to as content information), a service provider of the information is different. Therefore, the service provider of the content information is CP, Even if the information is transmitted to the internet via a server providing the window frame configuration information, the service provider is CP. Meanwhile, the 'server', which is for providing the window frame configuration information, provides only the window frame configuration information, and the server of CP is not a service provider of the window frame configuration information. Note that, actually, a server providing the window frame configuration information may be a server of a PC, but they are different servers having different functions. Therefore, even if including such cases, the server of CP cannot be a service provider of the window frame configuration information.

Accordingly, unless otherwise noted, the 'server' of the first embodiment corresponds to a server, which is a service provider of the window frame configuration information, and it does not make any difference if the server is actually a service provider of the content information or not. Meanwhile, the 'server of CP' corresponds to a server of service provider of the content information, and it does not make any difference if the server is actually a service provider of the window frame configuration information or not. The same applies to the other embodiments.

The 'window frame configuration information' corresponds to information for configuring a window frame based on the apparatus ID.

The examples of the information for configuring the window frame include information for determining width of the window frame, information for determining color of the window frame, information for determining design of the window frame such as arrangement of a frame among four sides of square screen, information for determining symbol, character, picture, and code, which are to be displayed on the window frame, information for changing design, codes to be displayed, color; size, width, and layout of the window frame upon execution of a predetermined process on the browser, and information for determining function to be provided with the browser by means of the window frame. The above information may be character information understandable for humans, information written in machine language readable only for the internet terminal apparatus, or any of symbol, code, and identification information, which express the above information. Further, the window frame configuration information may be information for determining content of video to be displayed on the window frame. The information for determining content of video to be displayed on the window frame may include information of number and order etc. of image information for displaying video as video information configuring the window frame other than the above-mentioned information for determining width and color etc. of the window frame. The window frame configuration information may be configured to implement various videos such as video in which color of the window frame changes with time lapse, video in which characters, figures, and codes change with time lapse, or video in which size and shape of the window frame change with time lapse. In this case, for example, processing for displaying the information stored in memory etc. as the video information configuring the window frame is carried out by CPU in accordance with instructions of control program operated on a memory for display such as a graphic memory (it does not matter if it is a memory for exclusive use or a memory using a part of main memory). As described above, the information displayed on the window frame may be still image information or video information. In either case, the window frame configuration information can be read or executed by the browser configuration unit having a function of configuring browser. Further, although the above information is basically a portion of information for configuring the browser, it may be all of the information for configuring the browser. In cases where the information is basically a portion of information for configuring the browser, the other portions are preliminary stored in the internet terminal apparatus, or are acquired from the other server or the other electronic device. Further, generally, the window frame configuration information is not dependent on the content displayed on the window

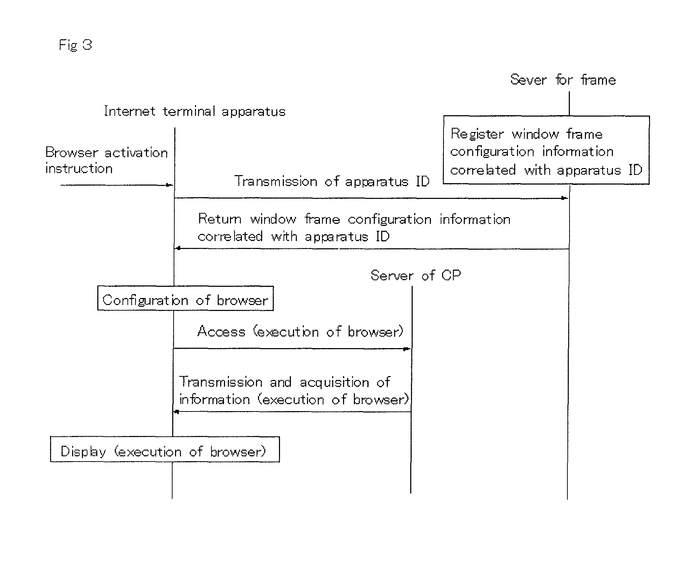

Fig. 3 is a conceptual diagram exemplifying the process of display, in which the internet terminal apparatus acquires the window frame configuration information based on the apparatus ID, and displays the window frame display information on the window frame by means of the window frame configuration information. In Fig. 3, the server for frame (the 'server', which provides only the window frame configuration information, excluding the server, which actually performs as the server of CP) preliminary registers and stores the window frame configuration information correlated with the apparatus ID. Then, the intemet terminal apparatus transmits the apparatus ID to the server for frame upon activation instruction for browser, and the server for frame returns the window frame configuration information correlated with the apparatus ID to the internet terminal apparatus. Subsequently, the internet terminal apparatus configures the browser by means of the window frame configuration information. In the configured window frame, for example, characters usable for promotion such as a logo of an auto company or company's name of a tour company are included. Further, by means of the browser having the window frame including the characters, the browser is executed to access to the server of CP, so that information to be displayed on the area surrounded by the window frame (content information) is acquired from the CP, and the content information is displayed on the area surrounded by the window frame configuration information. The point to notice of the present invention is that the content information and the logo and the company's name, which is displayed on the window frame, do not interlock with each other. Therefore, in this case, however the content information changes, the logo, the company's name, and the characters acquired by the window frame configuration information, which are displayed on the window frame, are not changed at all. Further, one more point to notice of the present invention is that the logo and the company's name are not information displayed by means of display function of the window frame but information united with the window frame as the information configuring the window frame itself. Therefore, if the information of the logo and the company's name are not acquired upon configuration of the browser, it means that portion of information configuring the window frame is lost, so that it is impossible to completely display the window frame.

In the above example of returning the window frame configuration information from the server to the intemet terminal apparatus, the return of the window frame configuration information correlated with the apparatus ID is carried out based on the apparatus ID transmitted from the internet terminal apparatus. However, the transmission of the apparatus ID from the intemet terminal apparatus to the server is not required. For example, a configuration, in which the server preliminary registers the window frame configuration information correlated with the apparatus ID, transmits the window frame configuration information correlated with the apparatus ID to the intemet terminal apparatus, and the intemet terminal apparatus acquires the window frame configuration information based on the apparatus ID of itself, may be used. As a concrete example of such case, the following configuration is cited. (a) A server preliminary stores a plurality of apparatus IDs including the apparatus ID of the intemet terminal apparatus, and the server transmits the window frame configuration information including the window frame configuration information correlated with the apparatus ID of the internet terminal apparatus to the internet terminal apparatus identified by the apparatus ID (in this case, the window frame configuration information correlated with the apparatus ID of the other intemet terminal apparatus is also transmitted to the intemet terminal apparatus. Meanwhile, the same applies to the other internet terminal apparatus). (b) The internet terminal apparatus acquires the window frame configuration information correlated with the apparatus ID of itself from a plurality of window frame configuration information based on the apparatus ID of itself.

Note that, in the above-described case, the acquisition of the window frame configuration information is carried out based only on the apparatus ID. However, the acquisition may be carried out by means of identifier in addition to the apparatus ID. Examples of the identifier include user ID, region ID, and apparatus ID of cooperating apparatus. An example of a case where the window frame configuration information is acquired based on the user ID in addition to the apparatus ID includes a case where a plurality of users of the same apparatus exist (e.g., family member), and by identifying each member based on the user ID, so that all or a portions of information for father and information for child are changed. Thus, by adding the user ID as identifier, it becomes possible to change content of the window frame configuration information acquired with respect to each user, thereby enabling distinction between the information for father and the information for child.

### <Configuration 2>

The 'browser configuration unit' configures internet browser by means of the window frame configuration information acquired by the acquisition unit for window frame configuration information. For example, by means of the window frame configuration information stored in memory etc. (including external storage device), the control program for configuring the browser is operated on the main memory, and processing is executed by CPU in accordance with instructions of control program operated on the main memory, so that the configuration of the intemet browser by the browser configuration unit is carried out. Note that the above-mentioned CPU, main memory, communication interface, and external storage device are connected to bus line. Here, in cases where the window frame configuration information is just a portion of information configuring the internet browser, the other information configuring the internet browser and the window frame configuration information acquired by the acquisition unit for window frame configuration information are combined and utilized. The combination does not always mean a state of one file or a program, and may be a state of multiple files or programs, which the CPU can successively execute. Therefore, it is only necessary that the CPU can automatically activate the internet browser when activation instruction of the internet browser at the intemet terminal is given. Therefore, concretely speaking, it is only necessary that the window frame configuration information acquired by the acquisition unit for window frame configuration information is identified by predetermined identification information, and is available for the other information configuring the intemet browser. Of course, conversely, the window frame configuration information acquired by the acquisition unit for window frame configuration information can identify the other information configuring the intemet browser, and may be available based on the identification. Further, in cases where the window frame configuration information is all of information configuring the internet browser, setting the window frame configuration information to executable state in accordance with the activation instruction corresponds to the processing of configuration' in the present invention

In the present invention, the 'internet browser' is Web browser or browser, and corresponds to software for browsing Web pages on the internet.

The 'execution unit' is configured to execute the browser configured by the browser configuration unit The 'execution' of browser is activation of browser to carry out browsing of Web page by means of the internet browser. Although examples of the browser include 'Internet Explorer' (registered trademark) or 'Netscape Navigator' (registered trademark), any software for browsing Web page on the internet may be used irrespective of its type. According to the above function, the internet browser configured by the browser configuration unit is actually displayed on a display screen, so that the above-mentioned logo or company's name etc. becomes visible.

Note that, the internet terminal apparatus may acquire the window frame configuration information with respect to each pressing of a browsing button, or may repeatedly use the information once acquired. In the latter case, with respect to each pressing of the browsing button, the same information is consistently displayed on the window frame.

Subsequently, the configuration of the first embodiment will be described with reference to concrete example. Here, a case in which the information displayed on the window frame by means of the window frame configuration information is advertising information will be described.

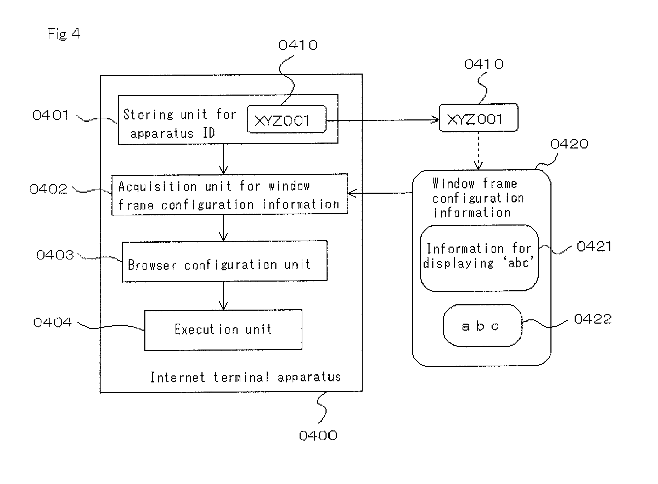

Fig. 4 is a concrete functional block diagram exemplifying an internet terminal apparatus of the example. Hereinbelow, description will be made with reference to Fig. 4.

For example, it is assumed that a user desires to display 'abc', a name of a car manufactured by auto company A, on a title bar, one of the window frames of the terminal apparatus, as advertising information of the A. In this case, the internet terminal apparatus 0400 used by the user transmits the 'XYZ001', the apparatus ID 0410 of itself, to the server. The server has preliminary registered and stored the window frame configuration information 0420 (the advertising information 0422 'abc', and the information for displaying it on the window frame 0421) correlated with the apparatus ID. Further, if the activation instruction of the browser is given, the internet terminal apparatus transmits the apparatus ID 'XYZ001' to the server, and the server returns the window frame configuration information to the intemet terminal apparatus based on the apparatus ID 'XYZ001' transmitted from the internet terminal apparatus. Consequently, the acquisition of the window frame configuration information by the internet terminal apparatus is completed.

After that, by means of the window frame configuration information (the advertising information 0422 'abc', and the information for displaying it on the window frame) acquired by the acquisition unit for window frame configuration information 0402, the browser configuration unit 0403 configures the internet browser, the execution unit 0404 executes the internet browser configured by the browser configuration unit. Consequently, the advertising information 'abc' can be displayed on the window frame of the screen of the internet terminal apparatus.

Note that, as described above, the internet terminal apparatus may acquire the window frame configuration information with respect to each pressing of a browsing button, or may repeatedly use the information once acquired. In the former case, it is possible to display new advertising information on the window frame with respect to each update of the advertising information. Such configuration has a merit of ensuring opportunities to access to the latest information from the point of view of user. Further, from the point of view of an advertising provider, it becomes possible to timely provide advertisement, which advertising provider desires to notify the user. Meanwhile, in the latter case, since the same information is consistently displayed on the window frame with respect to each pressing of the browsing button, from the point of view of the user, it becomes possible to keep displaying favorite advertising information, and to receive information service under his initiative. In addition, from the point of view of the advertising provider; it is merit to strongly impress the advertisement on the user.

Further, in either case, it is convenient to have a configuration in which the user can select a favorite content of the advertisement and the favorite advertising provider, by means of the internet terminal apparatus of the first embodiment (the pattern in which the content of advertisement is periodically updated can be regarded as 'selective' because the user has selected such a pattern). Therefore, it is preferable that the internet terminal apparatus is provided with a means for such selection. Consequently, the user can determine the time at which the advertisement is displayed. Comparing with a banner advertisement placed in a Web page, as to the banner advertisement, the user cannot determine the content of the advertisement and the advertising provider thereof, whereas, as to the advertisement of the example, it is different in that the user can determine the content of the advertisement and the advertising provider thereof as described above. Further, although the banner advertisement is generally displayed just while the Web page is displayed, as to the advertisement of the example, it is different in that the user can determine the time at which the advertisement is displayed, so that, for example, it becomes possible to consistently display the advertisement while the display screen of the internet terminal apparatus is activated.

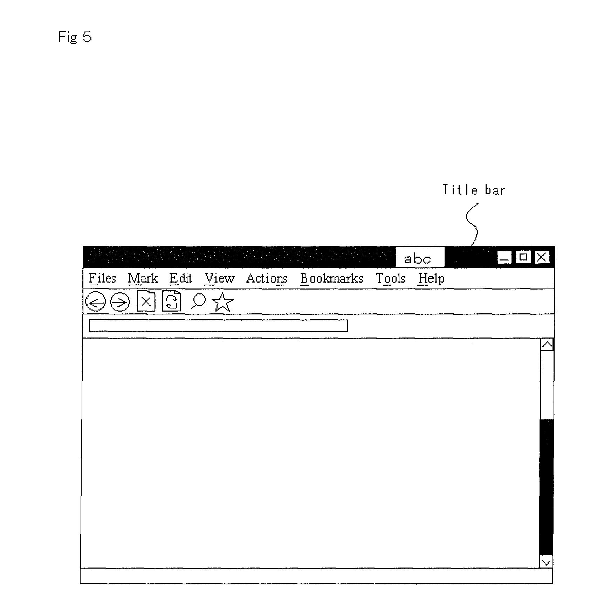

Fig. 5 is a conceptual diagram exemplifying a state in which the advertising information 'abc' of the example is displayed on the title bar of the display screen of the computer terminal apparatus, an internet terminal apparatus.

It is an objective of the first embodiment of the advertising information to make it possible for a user to select a product advertisement of interest, and to display it on his internet terminal apparatus. Further, it is an objective to make it possible for an advertisement provider to effectively provide the advertisement to the user.

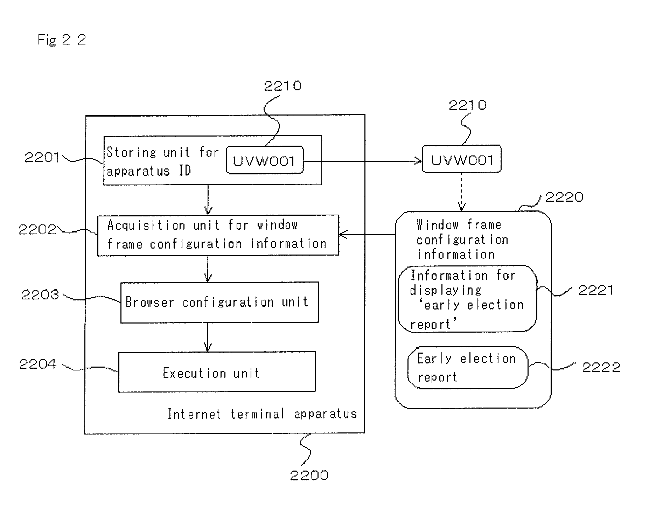

Fig. 22 is a concrete functional block diagram exemplifying an internet terminal apparatus of the example. Hereinbelow, a description will be made with reference to Fig. 22.

In this example, in order to serve the needs of a user of a digital TV as an internet terminal apparatus, who desires to know an early election report of a mayoral election of a local government while watching another broadcast program, the early election report provided by the election administration of the local government (e.g., the information indicating 'As of X p.m., with more than Y % of the ballots counted, Mr. Ichiro Koda: A votes, and Mr. Jiro Ostuno: B votes') is displayed on the window frame of the digital TV. In this case, the internet terminal apparatus 2200 used by the user transmits the apparatus ID of itself, 'UVW001' 2210, to the server. The server preliminary registers and stores the window frame configuration information 2220 (the information 2222 indicating 'As of X p.m., with more than Y % of the ballots counted, Mr. Ichiro Koda: A votes, and Mr. Jiro Ostuno: B votes' as the early election report (in Fig. 22, it is abbreviated to 'Early election report') and the information 2221 for displaying it on the window frame) correlated with the apparatus ID. Then, the digital TV, an internet terminal apparatus, transmits the apparatus ID 'UVW001' to the server when the activation instruction of the browser is given, and the server returns the window frame configuration information to the internet terminal apparatus based on the apparatus ID 'UVW001' transmitted from the intemet terminal apparatus. Therefore, the acquisition of the window frame configuration information by the internet terminal apparatus is completed.

After that, by means of the window frame configuration information (the information indicating 'As of X p.m., with more than Y % of the ballots counted, Mr. Ichiro Koda: A votes, and Mr. Jiro Ostuno: B votes' as the early election report (in Fig. 22, it is abbreviated to 'Early election report') and the information for displaying it on the window frame) acquired by the acquisition unit for window frame configuration information 2202, the browser configuration unit 2203 configures the internet browser, and the execution unit 2204 executes the internet browser configured by the browser configuration unit. Consequently, the early election report can be displayed on the window frame of the screen of the internet terminal apparatus.

As described above, similar to the above example, the internet terminal apparatus may acquire the window frame configuration information with respect to each pressing of a browsing button, or may repeatedly use the information once acquired. As to this example, in the former case, it is possible to display a new early election report on the window frame with respect to each update thereof, and this configuration is suitable for an early election report.

As to the early election report of an election, a TV station generally broadcasts the early election report by inserting it into a potion of a screen displaying a broadcast program of the TV station. Compared to the above case with the example of the present invention, the example has the following merits. Therefore, firstly, since the early election report of the example is displayed on the window frame different from the TV screen, without insertion into the TV screen, there is no effect on the broadcast program. Secondly, differently from the early election report displayed under initiative of the TV station, which the user cannot choose the timing of display, it is possible not to display the early election report if the user does not desire its display, or it is possible to display it while he desires its display. In addition, as to the content of display, for example, in cases where a specific candidate is declared to be the winner, and notification of a subsequent election report is not necessary, it is possible to continue to display the early election report, at the point of the declaration, without updating. Therefore, also in the example, differently from the early election report by the TV station, the user can determine the timing of the display thereof and the content thereof. Further, differently from the early election report by the TV station, which is displayed just while a program is being broadcasted, as to the early election report of the example, the user can determine the timing of display as described above, so that it becomes possible to consistently display the information while the screen, including the window frame of the internet terminal apparatus, is activated.

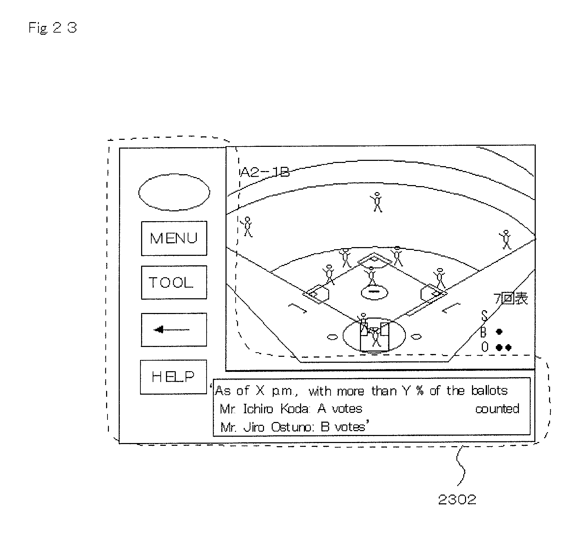

Fig. 23 is a conceptual diagram showing that the early election report of the example 'As of X p.m., with more than Y % of the ballots counted, Mr. Ichiro Koda: A votes, and Mr. Jiro Ostuno: B votes' is displayed on the window frame 2.303 of the display screen in the digital TV as the internet terminal apparatus.

### <Processing Flow>

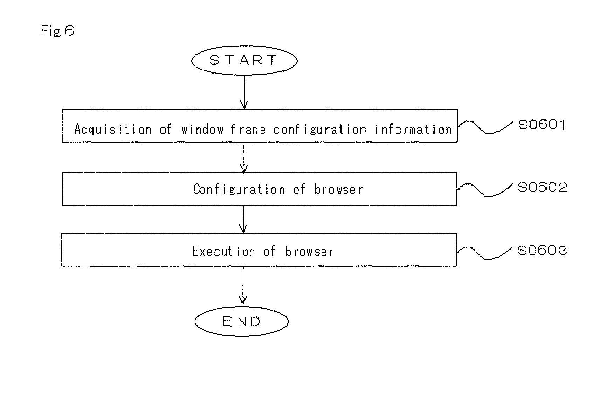

Fig 6 is a flowchart of the intemet terminal apparatus of the first embodiment.

At the outset, in the acquisition step for window frame configuration information S0601, the internet terminal apparatus acquires information configuring a window frame based on the apparatus ID for identifying the apparatus,

Subsequently, in the configuration step for browser S0602, the internet terminal apparatus the internet terminal apparatus configures internet browser by means of the window frame configuration information acquired by the acquisition step for window frame configuration information.

In addition, in the execution step S0603, the intemet terminal apparatus executes the browser configured by the configuration step for browser.

### <Brief Description of Effects of First Embodiment>

According to the intemet terminal apparatus of the first embodiment, it becomes possible to display the information browsed by means of the window frame configuration information on the window frame, which has not been utilized as an area for displaying the content information itself, thereby effectively utilizing the window frame.

Therefore, the intemet terminal apparatus can acquire the window frame configuration information in order to display the content information, configure the browser by means of the information, browse the content information by executing the browser, and display the content information on the window frame area of the display screen of the apparatus.

In addition, in the above process, by means of the apparatus ID for identifying the internet terminal apparatus, it becomes possible to establish a system in which only the server of CP can uniquely identify the internet terminal apparatus which provides information to be displayed on the window frame (via the server).

### <<Second embodiment>>

### <Concept of Second Embodiment>

The internet terminal apparatus of the second embodiment is an apparatus similar to the apparatus of the first embodiment, which executes a browser by means of the window frame configuration information acquired based on the apparatus ID thereof. Moreover, the apparatus comprises a receiving means for window frame configuration information, which receives the window frame configuration information returned according to the apparatus ID transmitted to the server.

### <Configuration>

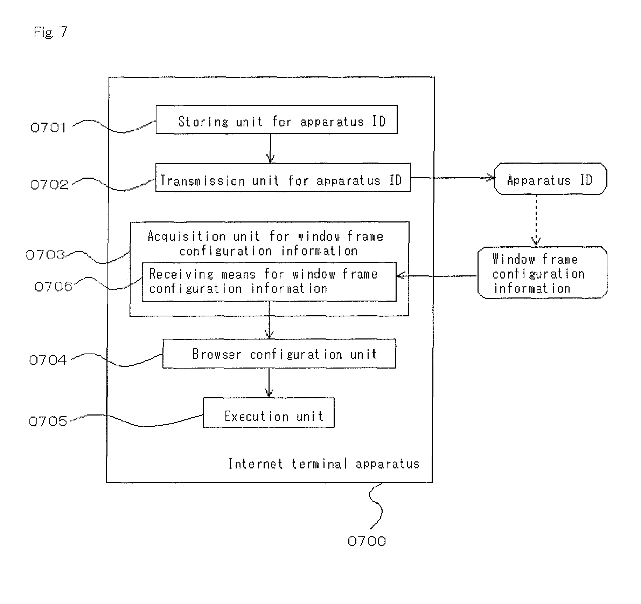

Fig. 7 is a functional block diagram exemplifying an intemet terminal apparatus of a second embodiment.

In Fig. 7, 'internet terminal apparatus' 0700 of the second embodiment comprises a 'storing unit for apparatus ID' 0701, 'transmitting unit for apparatus ID' 0702, 'acquisition unit for window frame configuration information' 0703, 'browser configuration unit' 0704, and 'execution unit' 0705. The acquisition unit for window frame configuration information further comprises 'receiving means for window frame configuration information' 0706.

The 'transmitting unit for apparatus ID' is configured to transmit the apparatus ID stored in the storing unit for apparatus ID. Generally, the transmission destination is a server providing the window frame configuration information, Note that any server, which provides the window frame configuration information, may be used (for example, it does not make any difference if the server actually provides the content or not).

The 'receiving means for window frame configuration information' is configured to receive the window frame configuration information returned according to the apparatus ID transmitted from the transmitting unit for apparatus ID. The returning source is a server providing the window frame configuration information. Also in this case, any server, which provides the window frame configuration information, may be used. In this case, the server is generally the same server, which is the transmission destination of the apparatus ID transmitted from the transmitting unit for apparatus ID.

Firstly, according to the above configuration, when the internet terminal apparatus acquires the window frame configuration information, the apparatus ID is surely transmitted to the server identified by the portal server identifier at every activation of the browser by the browser activation signal, and according to this, the window frame configuration information is returned, so that it becomes possible to make preliminary storage of the window frame configuration information by the internet terminal unnecessary, thereby reducing the burden of the equipment. Specifically, in cases where the window frame configuration information acquired by the acquisition unit for window frame configuration information is all of information configuring the internet browser, this configuration is extremely effective.

Secondly, according to the above configuration, from the point of view of the server, opportunity to affect the timing or frequency of returning the window frame configuration information to the intemet terminal apparatus is given, so that it becomes possible to control transmission of the window frame configuration information for the internet terminal apparatus, thereby enabling development of business that is convenient for the server side.

The other configurations are the same as those of the first embodiment, so that descriptions are omitted.

### <Processing Flow>

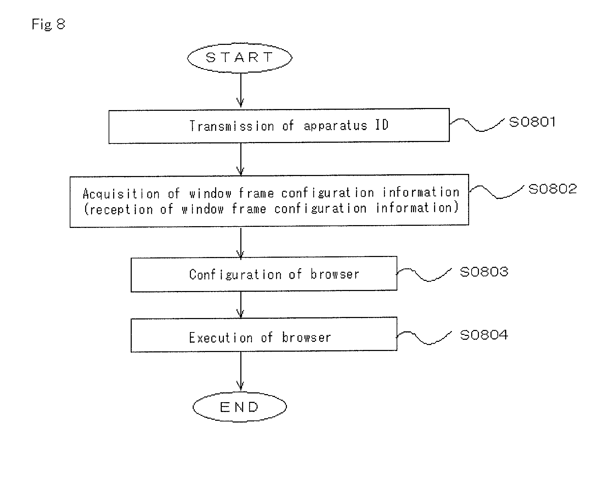

Fig. 8 is a flowchart of the internet terminal apparatus of the second embodiment.

In the transmitting step for apparatus ID S0801, the internet terminal apparatus transmits the apparatus ID for identifying the apparatus.

In the acquisition step for window frame configuration information S0802, the internet terminal apparatus receives and acquires the window frame configuration information returned according to the apparatus ID transmitted by the transmitting step for apparatus ID.

The other configuration is the same as that of the first embodiment, so that descriptions are omitted.

### <Brief Description of Effects of Second Embodiment>

According to the internet terminal apparatus of the second embodiment, the acquisition of the window frame configuration information is carried out by receiving it as the information returned according to the apparatus ID transmitted to the server, so that it becomes possible to make preliminary storage by the internet terminal apparatus unnecessary, thereby reducing the burden of equipment. Moreover, from the point of view of the server, it becomes possible to control transmission of the window frame configuration information for the intemet terminal apparatus, thereby enabling development of useful business for the server side.

### <<Third embodiment>>

### <Concept of Third Embodiment>

The internet terminal apparatus of the third embodiment is an apparatus similar to the apparatus of the second embodiment, which executes the browser by means of the window frame configuration information acquired based on the apparatus ID thereof. Moreover, the apparatus comprises the receiving means for window frame configuration information, which receives the window frame configuration information returned according to the apparatus ID transmitted to the server. Furthermore, the apparatus acquires a browser activation signal, and comprises a transmitting means for apparatus ID, which transmits the apparatus ID to a server identifier of a server to be initially accessed upon activation of the browser.

### <Configuration>

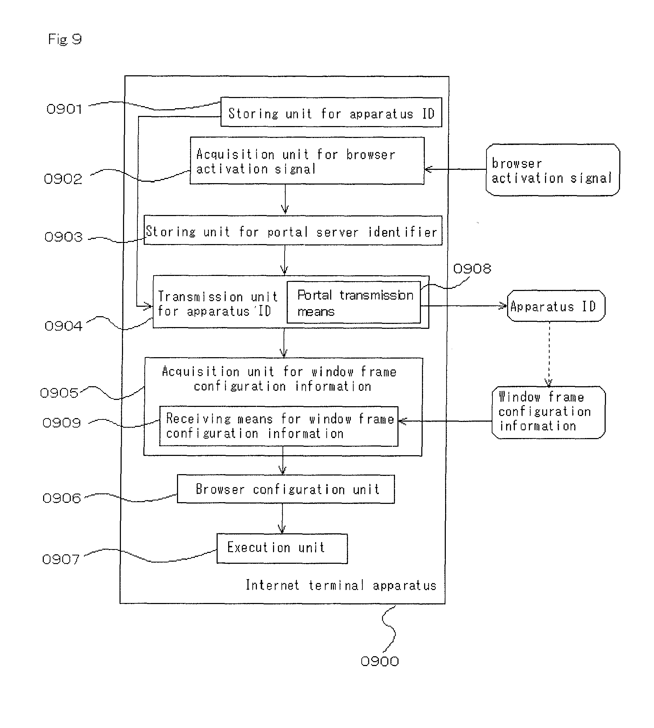

Fig 9 is a functional block diagram exemplifying an internet terminal apparatus of a third embodiment.

In Fig 9, 'internet terminal apparatus' 0900 of the third embodiment comprises 'storing unit for apparatus ID' 0901, 'acquisition unit for browser activation signal' 0902, 'storing unit for portal server identifier' 0903, 'transmitting unit for apparatus ID' 0904, 'acquisition unit for window frame configuration information' 0905, 'browser configuration unit' 0906, and 'execution unit' 0907. The transmitting unit for apparatus ID further comprises a 'portal transmitting means' 0908. The acquisition unit for window frame configuration information further comprises a 'receiving means for window frame configuration information' 0909.

The 'browser configuration unit' is configured to acquire the browser activation signal.

The 'browser activation signal' is a signal for instructing execution (activation) of the browser.

The 'storing unit for portal server identifier' is configured to store a portal server identifier of a server to be initially accessed upon activation of the browser. Although the 'portal server' generally corresponds to a server to be initially accessed among servers having a Web page, the 'portal server identifier' of the present invention may be any identifier of a server to be initially accessed, and is not necessary to be an identifier of the portal server having the Web page. A server for frame is a typical example of a server, which does not have a Web page. Therefore, if the server to be initially accessed is a server not having a Web page, the server is not the portal server, whereas, the identifier of the server corresponds to the portal server identifier. Note that the identifier widely includes number string indicating address of the server to be accessed, and character string etc.

The 'portal transmitting means' is configured to transmit the apparatus ID for the identifier stored in the storing unit for portal server identifier

Firstly, according to the above configuration, it becomes possible to fix the acquirer of the window frame configuration information to the same server without exception by uniquely specifying the portal server identifier, to which the internet terminal apparatus transmits the apparatus ID, so that in the above-mentioned case where the window frame configuration information is just a portion of the information configuring the internet browser, it becomes possible to smoothly combine the other information configuring the internet browser and the window frame configuration information acquired by the acquisition unit for window frame configuration information.

Secondly, according to the above configuration, from the point of view of the server, the apparatus ID transmitted for acquiring the window frame configuration information from the internet terminal apparatus can be consistently received by the same server, thereby enabling development of business for providing such services in an integrated manner.

The other configurations are the same as those of the second embodiment, so that descriptions are omitted.

### <Processing Flow>

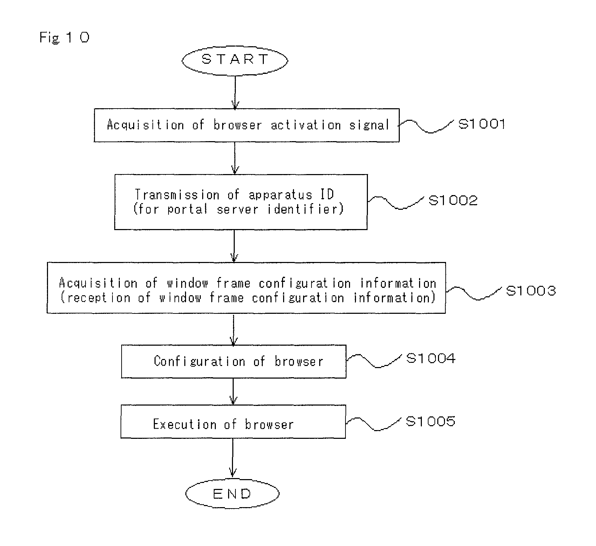

Fig. 10 is a flowchart of the internet terminal apparatus of the third embodiment.

In the acquisition step for browser activation signal S1001, the internet terminal apparatus acquires the browser activation signal.

The transmission in the transmitting step for apparatus ID is carried out for the portal server identifier.

The other processes are the same as those of the second embodiment, so that descriptions are omitted.

### <Brief Description of Effects of Third Embodiment>

According to the internet terminal apparatus of the third embodiment, it becomes possible to fix the acquirer of the window frame configuration information to the same server without exception by uniquely specifying the portal server identifier, to which the internet terminal apparatus transmits the apparatus ID, so that in the above-mentioned case where the window frame configuration information is just a portion of the information configuring the intemet browser, it becomes possible to smoothly combine the other information configuring the internet browser and the window frame configuration information acquired by the acquisition unit for window frame configuration information. Moreover; from the point of view of the server, it becomes possible to develop business of the service providing the window frame configuration information to the internet terminal apparatus in an integrated manner.

### <<Fourth embodiment>>

### <Concept of Fourth Embodiment>

The server for frame of the fourth embodiment receives the apparatus ID from the intemet terminal apparatus of the second or third embodiment, stores the window frame configuration information correlated with the apparatus ID, and returns the window frame configuration information to the internet terminal apparatus.

### <Configuration>

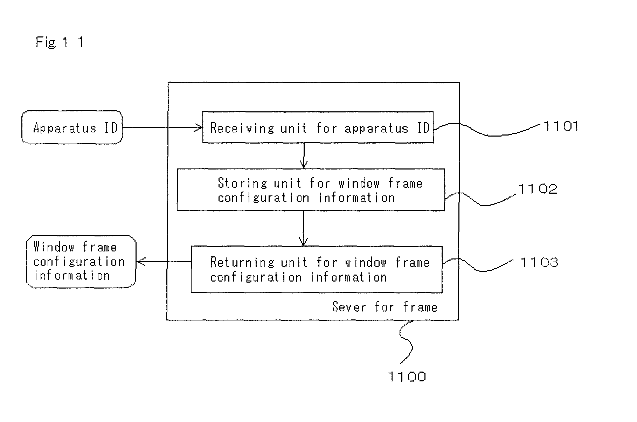

Fig. 11 is a functional block diagram of a server for frame of a fourth embodiment. In Fig. 11, a 'server for frame' 1100 of the fourth embodiment comprises 'receiving unit for apparatus ID' 1101, 'storing unit for window frame configuration information' 1102, and 'returning unit for window frame configuration information' 1103.

The 'server for frame' corresponds to the 'server', which is for providing the window frame configuration information excluding a server, which is actually a server of CP. Therefore, the server for frame does not at all provide content information. Further, as described above, the window frame configuration information is not dependent on the content displayed on the window, so that the information provided by the server for frame is not at all dependent on the content displayed on the window.

The 'receiving unit for apparatus ID' is configured to receive an apparatus ID from the transmitting unit for apparatus ID of the internet terminal apparatus.

The 'storing unit for window frame configuration information' stores the window frame configuration information correlated with the apparatus ID.

The window frame configuration information stored by the storing unit for window frame configuration information is information, which the server for frame generates by itself and stores, or acquires from another server etc. and stores. In the latter case, for example, the window frame configuration information is acquired from the server of CP, which does not provide the window frame configuration information, and is stored. Further, correlation between the apparatus ID and the window frame configuration information is carried out, for example, based on a correlation table stored by the storing unit for window frame configuration information, in which the apparatus ID and the window frame configuration information are correlated.

The' returning unit for window frame configuration information' is configured to acquire the window frame configuration information, which has been correlated with the apparatus ID received by the receiving unit for apparatus ID, from the storing unit for window frame configuration information, and to return it to the internet terminal apparatus.

For example, in view of the case of advertising information of the first embodiment, the storing unit for window frame configuration information of the server for frame of the fourth embodiment stores the window frame configuration information including the advertising information 'abc' correlated with the apparatus ID 'XYZ001' of the internet terminal apparatus, and if the receiving unit for apparatus ID receives the apparatus ID transmitted from the internet terminal apparatus, the returning unit for window frame configuration information acquires the window frame configuration information including the advertising information 'abc' correlated with the apparatus ID from the storing unit for window frame configuration information, and returns it to the internet terminal apparatus.

Here, the present invention is characterized in that the window frame configuration information returned from the returning unit for window frame configuration information is information configuring the window frame itself, and not information displayed on the window frame configured by the browser based on the information stored by the internet terminal apparatus, In the above example, the advertising information 'abc' is returned as the information configuring the window itself including the advertising information, and not only the information 'abc', displayed on the window frame configured by the browser based on the information stored by the internet terminal apparatus, is returned. Therefore, the window frame configuration information including 'abc' returned from the returning unit for window frame configuration information is the window frame configuration information itself, so that the frame is not formed without the portion 'abc'.

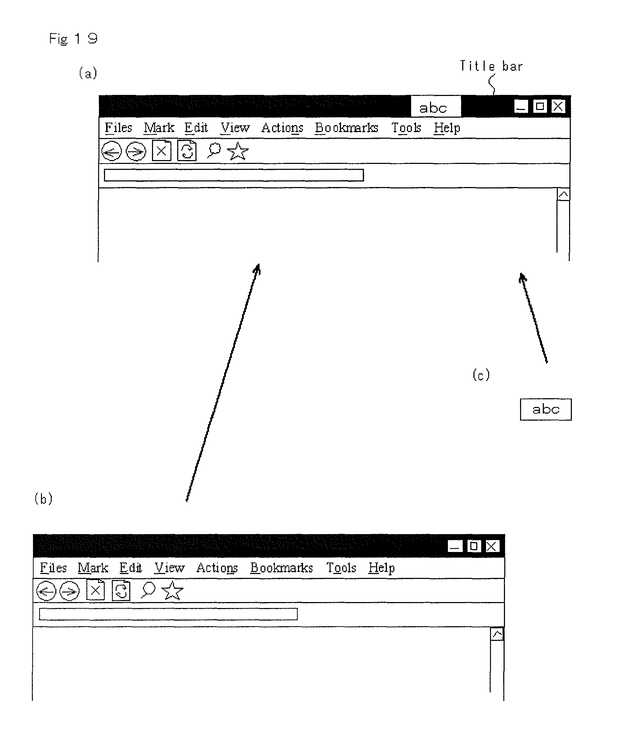

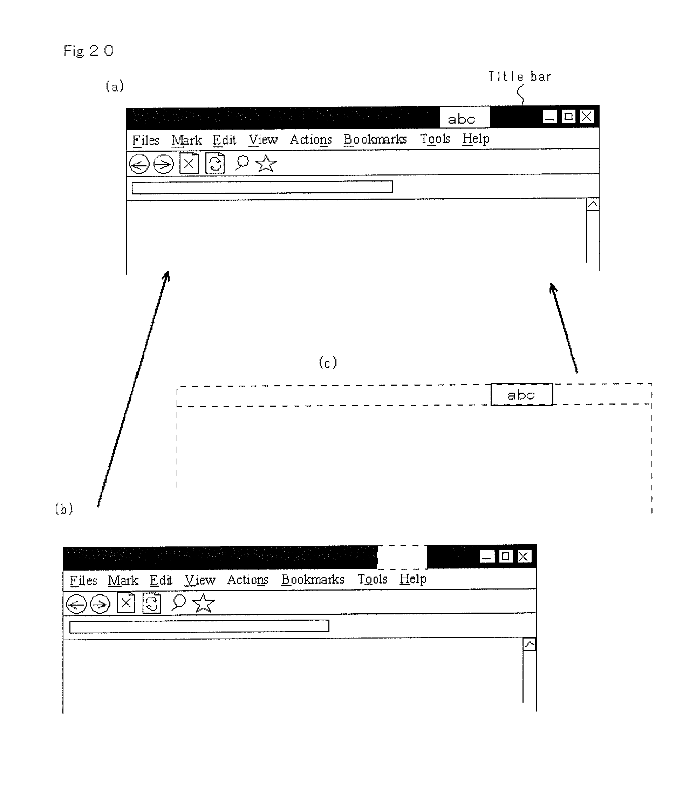

Fig. 19 and 20 are conceptual diagrams for explaining the above description by showing concrete examples in comparison with the related art.

Fig. 19 shows the related art. For example, in cases where the advertising information 'abc' is displayed on the title bar of the internet terminal apparatus in the form of Fig. 19 (a), the advertising information 'abc' itself is transmitted from the server, and this information is displayed on the title bar configured based on the information stored by the internet terminal apparatus itself. Therefore, the 'abc' of this case is just information displayed on the title bar. Accordingly, Fig. 19 (b) shows the case where the portion, configured only by the information stored by the internet terminal apparatus itself is extracted and indicated, and the title bar itself has no missing portion. Meanwhile, Fig. 19 (c) shows the case where only the information, the advertising information 'abc', transmitted from the server is extracted and indicated. In this case, the information indicating a portion in the title bar, on which the above information is displayed, is not necessary as the information to be transmitted from the server. It is enough that only the advertising information is transmitted, and the internet terminal apparatus determines the portion in the title bar, on which the information is displayed, by itself, and displays the information. Thus described, the information indicated by Fig. 19 (c) is put on the frame indicated by Fig. 19 (b), so that display of the advertising information 'abc' on the title bar as shown by Fig. 19 (a) is completed.

Fig. 20 shows the case of the fourth embodiment. Therefore, Fig. 20 is a conceptual diagram showing a portion of the screen of the intemet terminal apparatus in cases where along with the information stored by the intemet terminal apparatus itself, the window frame configuration information returned from the returning unit for window frame configuration information of the server for frame is executed by the browser. For example, in the case of display as shown by Fig. 20 (a) similar to Fig. 19 (a), the window frame configuration information including the advertising information 'abc' is transmitted from the server as the information configuring a portion of the title bar, and is displayed in the form of combination with the other portion of the title bar configured based on the information stored by the intemet terminal apparatus itself. Accordingly, in this case, Fig. 20 (b) shows the case where the portion, configured only by the information stored by the internet terminal apparatus itself, is extracted and indicated, and differently from Fig, 19 (b), the title bar has a missing portion. Meanwhile, Fig. 20 (c) shows the case where only the information transmitted from the server is extracted and indicated. In this case, differently from Fig. 19 (c), the information is not the advertising information 'abc' itself, and is the window frame configuration information including the advertising information. In this case, the information indicating a portion in the title bar, on which the above information is displayed, is necessary as the information to be transmitted from the server. The reason for this is that, as described above, since the intemet terminal apparatus itself stores only the information of the other portion of the title bar, if the portions in the title bar, on which each information is respectively displayed, are not specified, it is impossible to display the entire title bar in the form of combination of all information. Therefore, in this example, the portion of the frame indicated by Fig. 19 (b) and the portion of the frame indicated by Fig. 19 (c) are combined, so that the frame without the missing portion is configured, and display of the advertising information 'abc' on the title bar as shown by Fig. 20 (a) is completed.

The above configuration is for ensuring the function of the server for frame to make the configuration, in which the internet terminal apparatus of the second or third embodiment transmits the apparatus ID to the server, and receives the returned window frame configuration information, effective,

Note that although the above configuration has been described with reference to the case of the server for frame, this is not necessary. Any server for providing the window frame configuration information may be used if it is not a server for frame.

Firstly, according to the above configuration ensured by the server side, when the internet terminal apparatus acquires the window frame configuration information, the apparatus ID is surely transmitted to the server identified by the portal server identifier at every activation of the browser by the browser activation signal, and according to this, the window frame configuration information is returned, it becomes possible to make preliminary storage of the window frame configuration information by the internet terminal unnecessary, thereby reducing burden of equipments.

Secondly, according to the above configuration, the server side can have the opportunity to affect the timing or frequency of returning the window frame configuration information to the internet terminal apparatus is given, so that it becomes possible to control transmission of the window frame configuration information for the intemet terminal apparatus. Moreover, as described above, the window frame configuration information is not generally dependent on the content displayed on the window, and the server can determine a portion of the information, so that it becomes possible for the server to consistently display the information on the internet terminal apparatus.

### <Processing Flow>

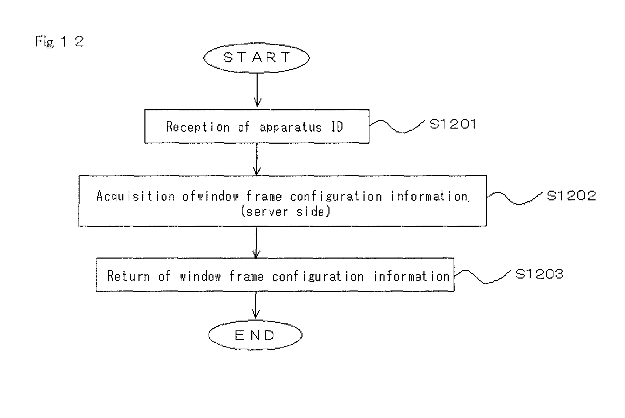

Fig. 12 is a flowchart of the server for frame of the fourth embodiment.

At the outset, in the receiving step for apparatus ID S1201, the server for frame receives the apparatus ID transmitted from the internet terminal apparatus.

Subsequently, in the acquisition step (server side) for window frame configuration information S1202, the server for frame acquires the window frame configuration information, which has been correlated with the apparatus ID received by the receiving step for apparatus ID, and has been stored by the server, inside the server for frame.

Additionally, in the returning step for window frame configuration information S1203, the server for frame returns the window frame configuration information acquired in the acquisition step (server side) for window frame configuration information to the intemet terminal apparatus.

### <Brief Description of Effects of Fourth Embodiment>

According to the server of the fourth embodiment, the information is transmitted to the internet terminal apparatus identified by the apparatus ID correlated with the window frame configuration information, so that it becomes possible to effectively utilize the window frame in the internet terminal apparatus. Moreover, the server side can control the processing flow of the present invention, so that it becomes possible to provide services utilizing the above configuration

### <<Fifth embodiment>>

### <Concept of Fifth Embodiment>

The server for frame of the fifth embodiment is a server for frame similar to that of the fourth

embodiment, which receives the apparatus ID from the internet terminal apparatus of the second or third embodiment, stores the window frame configuration information correlated with the apparatus ID, and returns the window frame configuration information to the internet terminal apparatus. Moreover, the server further comprises a management unit for window frame configuration information, which manages the window frame configuration information returned by the returning unit for window frame configuration information.

### <Configuration>

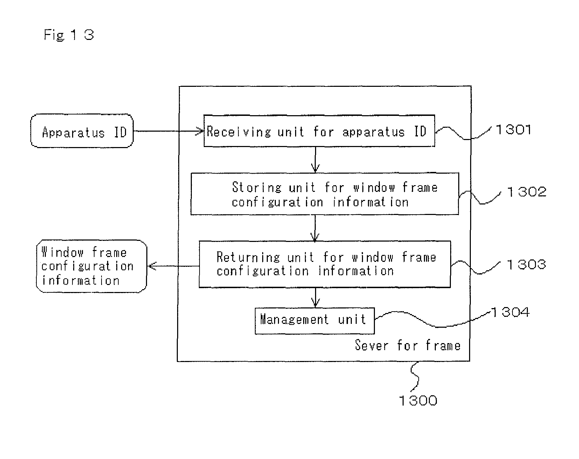

Fig. 13 is a functional block diagram of a server for frame of a fifth embodiment. In Fig. 13, 'server for frame' 1300 of the fifth embodiment comprises 'receiving unit for apparatus ID' 1301, 'storing unit for window frame configuration information' 1302, 'returning unit for window frame configuration information' 1303, and 'management unit for window frame configuration information' 1304.

The 'management unit for window frame configuration information' is configured to manage the information returned by the returning unit for window frame configuration information. Here, the 'management' corresponds to addition, modification, and deletion of the window frame configuration information. Specifically, it is an aspect that these processes are carried out by correlating with the apparatus ID. Concretely speaking, for example, addition of the advertising information 'def' as information of a new car to the window frame configuration information including the above-mentioned advertising information 'abc' is carried out, modification of the 'abc', in which the 'abc' is replaced by the 'def', is carried out, or deletion of the 'abc' is carried out.

The above configuration has a merit for a user to ensure an opportunity to access the latest information. Moreover, from the point of view of the advertising provider, it becomes possible to timely provide an advertisement, which the provider desires to notify to the user.

The other configurations are the same as those of the fourth embodiment, so that descriptions are omitted.

### <Processing Flow>

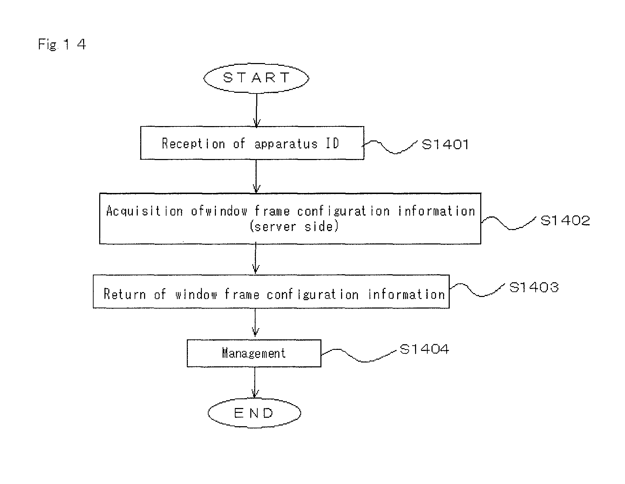

Fig. 14 is a flowchart of the server for frame of the fifth embodiment.

In the management step S 1404, the server for frame of the fifth embodiment manages the information returned in the returning step of the window frame configuration information. For example, the server for frame carries out addition, modification, or deletion of the window frame configuration information.

The other processes are the same as those of the fourth embodiment, so that descriptions are omitted.

### <Brief Description of Effects of Fifth Embodiment>

According to the server of the fifth embodiment, the information is transmitted to the internet terminal apparatus identified by the apparatus ID correlated with the window frame configuration information, so that it becomes possible to effectively utilize the window frame in the intemet terminal apparatus. Moreover, the server side can control the processing flow of the present invention, so that it becomes possible to provide services utilizing the above configuration. Consequently, it becomes possible for the user to ensure the opportunity to access to the latest information, and from the point of view of the advertising provider, it becomes possible to timely provide an advertisement, which the provider desires to notify to the user.

### <<Sixth embodiment>>

### <Concept of Sixth Embodiment>

The information system of the sixth embodiment comprises the internet terminal apparatus of the second embodiment, and the server for frame of the fourth embodiment.

### <Configuration>

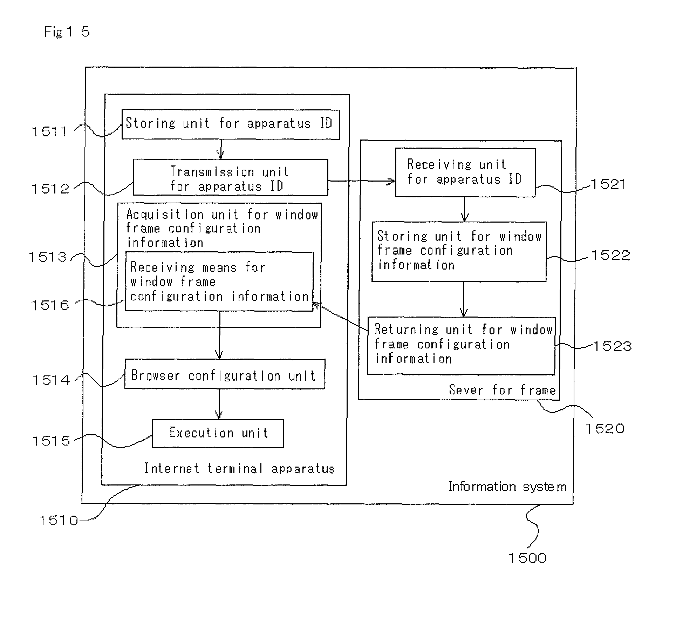

Fig. 15 is a functional block diagram of an information system of a sixth embodiment. In Fig. 15, 'information system' 1500 of the sixth embodiment comprises an 'internet terminal apparatus' 1510, and 'server for frame' 1520,

The internet terminal apparatus comprises a 'storing unit for apparatus ID' 1511, 'transmitting unit for apparatus ID' 1512, 'acquisition unit for window frame configuration information' 1513, 'browser configuration unit' 1514, and 'execution unit' 1515. The acquisition unit for window frame configuration information further comprises a 'receiving means for window frame configuration information' 1516.

The server for frame comprises 'receiving unit for apparatus ID' 1521, 'storing unit for window frame configuration information' 1522, and 'returning unit for window frame configuration information' 1523.

In the sixth embodiment, a transmission destination, to which the internet terminal apparatus transmits the apparatus ID, is the server for frame. Further, the server for frame, which has received the apparatus ID, is configured to acquire the window frame configuration information correlated with the apparatus ID, and returns it to the intemet terminal apparatus. The internet terminal apparatus, which has acquired the window frame configuration information from the server for frame, configures the intemet browser by means of the information, and executes the browser. The configuration of the internet terminal apparatus has been described in the second embodiment, and the configuration of the server for frame has been described in the fourth embodiment, so that descriptions are omitted.

### <Processing Flow>

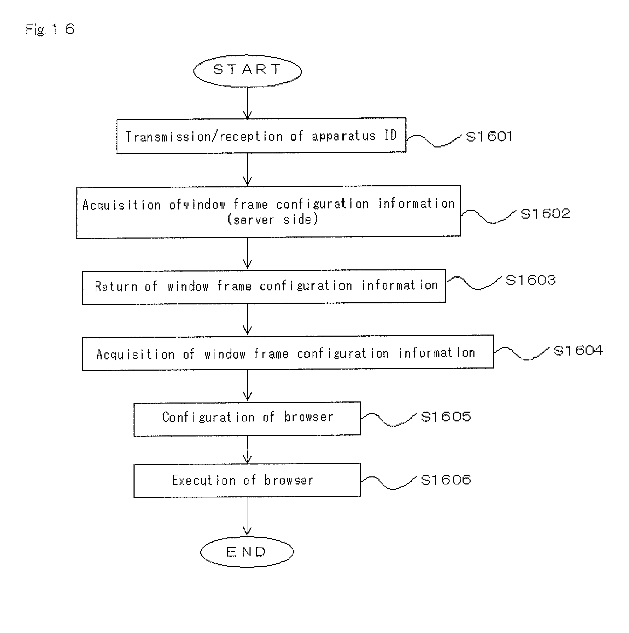

Fig. 16 is a flowchart of the information system of the sixth embodiment.

At the outset, in the transmitting/receiving step for apparatus ID S1401, the information system transmits the apparatus ID for identifying the internet terminal apparatus from the internet terminal apparatus to the server for frame, and receives it by the server for frame,

Subsequently, in the acquisition step (server side) for window frame configuration information S1402, the information system acquires the window frame configuration information, which has been correlated with the apparatus ID received by the receiving step for apparatus ID, and has been stored by the system, inside the server for frame.

Subsequently, in the returning step for window frame configuration information S 1403, the information system returns the window frame configuration information acquired in the acquisition step (server side) for window frame configuration information from the server for frame to the internet terminal apparatus.

Subsequently, in the acquisition step for window frame configuration information S1404, the information system receives the window frame configuration information returned from the server for frame by the internet terminal apparatus, thereby acquiring it.

Subsequently, in the configuration step for browser S1405, the information system configures the intemet browser by means of the window frame configuration information acquired in the acquisition step for window frame configuration information.

Additionally, in the execution step for browser S1406, the information system executes the browser configured by the configuration step for browser.

### <Brief Description of Effects of Sixth Embodiment>

According to the server of the sixth embodiment, it becomes possible to display the information browsed by means of the window frame configuration information on the window frame, which has not been utilized as an area for displaying the content information itself, thereby effectively utilizing the window frame. Moreover, the server side can control the processing flow of the present invention, so that it becomes possible to provide services utilizing the above system.

### <<Seventh embodiment>>

### <Concept of Seventh Embodiment>

The information system of the seventh embodiment comprises the internet terminal apparatus of the third embodiment, and the server for frame of the fourth embodiment.

### <Configuration>

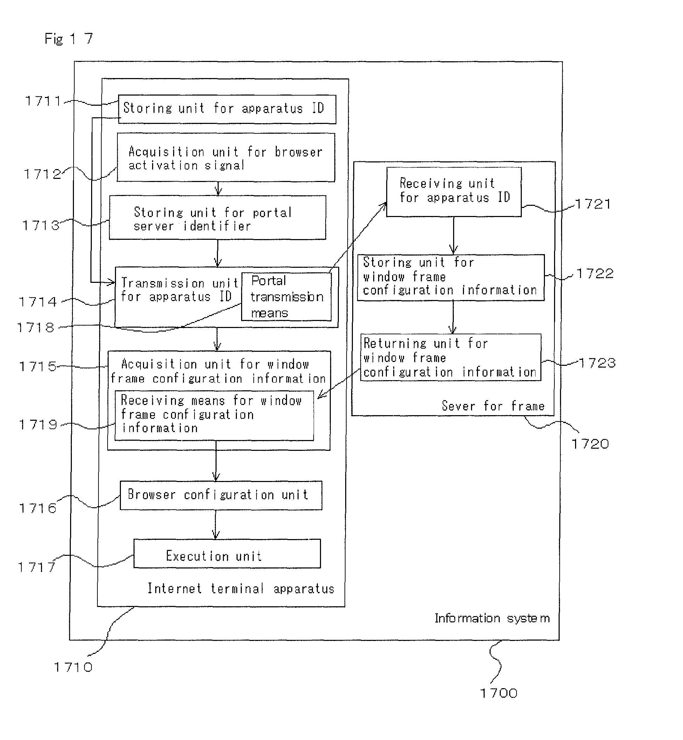

Fig. 17 is a functional block diagram of an information system of a seventh embodiment. In Fig. 17, 'information system' 1700 of the sixth embodiment comprises an 'internet terminal apparatus' 1710, and 'server for frame' 1720.

The internet terminal apparatus comprises 'storing unit for apparatus ID' 1711, 'acquisition unit for browser activation signal' 1712, 'storing unit for portal server identifier' 1713, 'transmitting unit for apparatus ID' 1714, 'acquisition unit for window frame configuration information' 1715, 'browser configuration unit' 1716, and 'execution unit' 1717. The transmitting unit for apparatus ID further comprises a 'portal transmitting means' 1718. The acquisition unit for window frame configuration information further comprises a 'receiving means for window frame configuration information' 1719.

The server for frame comprises 'receiving unit for apparatus ID' 1721, 'storing unit for window frame configuration information' 1722, and 'returning unit for window frame configuration information' 1723.

The difference between the seventh embodiment and sixth embodiment is that the configuration of the internet terminal apparatus is not that described in the second embodiment but that described in the third embodiment. Therefore, differently from the sixth embodiment, the internet terminal apparatus of the information system of the seventh embodiment comprises the acquisition unit for browser activation signal, and the storing unit for portal server identifier, and the transmitting unit for apparatus ID comprises the portal transmitting means.

The configurations of the acquisition unit for browser activation signal, the storing unit for portal server identifier, and the portal transmitting means are the same as those of the third embodiment, so that descriptions are omitted.

The other features are the same as those of the sixth embodiment, so that descriptions are omitted.

### <Processing Flow>

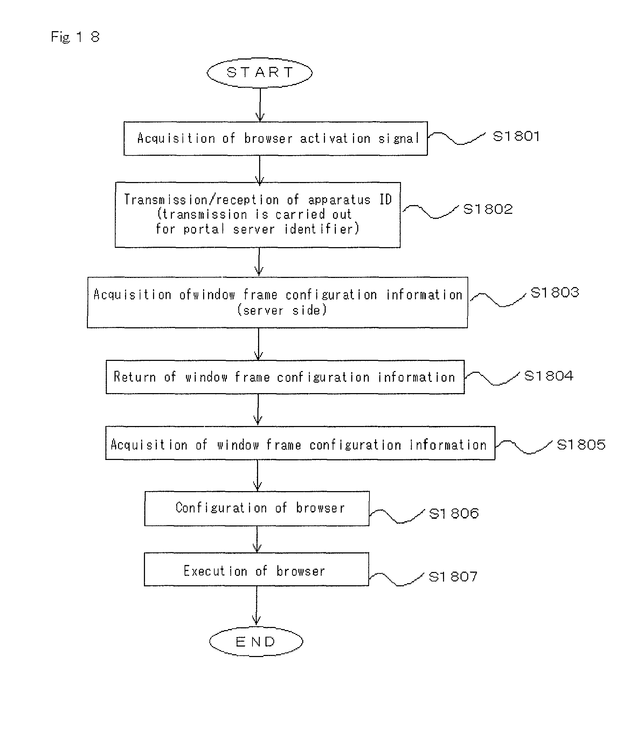

Fig. 18 is a flowchart of the server for frame of the seventh embodiment.

In the acquisition step for browser activation signal S 1801, the information system acquires the browser activation signal.

Further, the transmission/reception in the transmitting step for apparatus ID S1802 is carried out for the portal server identifier.

The other processes are the same as those of the sixth embodiment, so that descriptions are omitted.

### <Brief Description of Effects of Seventh Embodiment>

According to the server of the seventh embodiment, it becomes possible to display the information browsed by means of the window frame configuration information on the window frame, which has not been utilized as an area for displaying the content information itself, thereby effectively utilizing the window frame. Moreover, the server side can control the processing flow of the present invention, so that it becomes possible to provide services utilizing the above system.

## Claims

1. An internet terminal apparatus comprising:
a storing unit for apparatus ID, which stores an apparatus ID for identification of the terminal apparatus itself
an acquisition unit for window frame configuration information, which acquires information configuring window frame based on said apparatus ID;
a browser configuration unit, which configures internet browser by means of the window frame configuration information acquired by said acquisition unit for window frame configuration information; and
an execution unit, which executes the browser configured by said browser configuration unit.

2. The internet terminal apparatus according to Claim 1, further comprising:
a transmitting unit for apparatus ID, which transmits the apparatus ID stored in said storing unit for apparatus ID, wherein
said acquisition unit for window frame configuration information comprises,
a receiving means for window frame configuration information, which receives the window frame configuration information returned according to the apparatus ID transmitted from said transmitting unit for apparatus ID.

3. The intemet terminal apparatus according to Claim I, further comprising:
an acquisition unit for browser activation signal; and
a storing unit for portal server identifier, which stores a portal server identifier of a server to be initially accessed upon activation of said browser, wherein
said transmitting unit for apparatus ID comprises,
a portal transmitting means, which transmits the apparatus ID for the identifier stored in said storing unit for portal server identifier.

4. A server for frame, comprising:
a receiving unit for apparatus ID, which receives an apparatus ID from the transmitting unit for apparatus ID of the internet terminal apparatus;
a storing unit for window frame configuration information, which stores the window frame configuration information correlated with the apparatus ID; and
a returning unit for window frame configuration information, which acquires the window frame configuration information, which has been correlated with the apparatus ID received by the receiving unit for apparatus ID, from the storing unit for window frame configuration information, and returns it to the internet terminal apparatus.

5. The server for frame according to Claim 4, further comprising:
a management unit for window frame configuration information, which manages the window frame configuration information returned by the returning unit for window frame configuration information.

6. An information system comprising:
the intemet terminal apparatus according to Claim 2; and
the server for frame according to Claim 4.

7. An information system comprising:
the internet terminal apparatus according to Claim 3; and
the server for frame according to Claim 4.

8. An execution method for browser, comprising:
an acquisition step for window frame configuration information, which acquires information configuring window frame based on said apparatus ID;
a configuration step for browser, which configures internet browser by means of the window frame configuration information acquired by said acquisition step for window frame configuration information; and
an execution step, which executes the browser configured by said configuration step for browser.

9. The execution method for browser according to Claim 8, further comprising:
a transmitting step for apparatus ID, which transmits the apparatus ID stored in said storing unit for apparatus ID; and
a receiving step for window frame configuration information, which receives the window frame configuration information returned according to the apparatus ID transmitted from said transmitting step for apparatus ID.

10. The execution method for browser according to Claim 9, further comprising:
an acquisition step for browser activation signal, wherein
the transmission by said transmitting step for apparatus ID is carried out for a portal server identifier, which is an identifier of a server to be initially accessed upon activation of the browser.
